# EUROPÄISCHE PATENTANMELDUNG

(11) **EP 1 029 516 A2**
(43) Veröffentlichungstag der Anmeldung: **23.08.2000**
(21) Anmeldenummer: 00101550.2
(22) Anmeldetag: 27.01.2000
(51) Int. Cl.: A61C 19/10, G01J 3/46

(54) **Verfahren zur Farbbestimmung von Objekten**

(30) Priorität: 16.02.1999 DE 19906375
(71) Anmelder: Diem, Reinhard, 71083 Herrenberg (DE)
(72) Erfinder: Diem, Reinhard, 71083 Herrenberg (DE)
(74) Vertreter: Klocke, Peter, Dipl.-Ing.

(57) **Zusammenfassung**

Verfahren zur Farbbestimmung von Objekten, insbesondere von Zähnen unter Verwendung einer Videokamera, die Farbsignale zu einer Digitalisierungseinrichtung liefert sowie eine damit verbundene Datenverarbeitungseinrichtung, bei dem die Farbe des Objekts aufgenommen und durch Datenaustausch aufgrund der Objektvorlage ein farbgetreues Abbild erzeugt wird. Hierzu werden in einem ersten Einstellungsschritt die Einstellungen gespeichert, die ein originalgetreue Farbwiedergabe des Objekts gewährleisten. In einem zweiten Einstellungsschritt werden bei gleicher Belichtung die digitalen RGB-Werte einer Farbskala von einer weißen Kalibrierkarte erfasst und gespeichert. Bei der Aufnahme werden zuerst die von der Kalibrierkarte erzeugten RGB-Werte mit den gespeicherten verglichen und bei der anschließenden Aufnahme des Objekts bei gleicher Belichtung eine entsprechende Farbkorrektur durchgeführt. Das Verfahren erlaubt damit die originalgetreue Farbwiedergabe des Objekts unabhängig von den Einflüssen der Belichtung.

## Beschreibung

Die vorliegende Erfindung betrifft ein Verfahren zur Farbbestimmung von Objekten, insbesondere von Zähnen, unter Verwendung einer Videokamera, die Farbsignale zu einer Digitalisierungseinrichtung liefert sowie eine damit verbundene Datenverarbeitungseinrichtung, bei dem die Farbe des Objekts aufgenommen und durch Datenaustausch aufgrund der Objektvorlage ein farbgetreues Abbild erzeugt wird.

Insbesondere bei der Herstellung von Zahnersatz ist es erforderlich, dass die Ersatzzähne möglichst die gleiche Farbe haben wie die übrigen im Gebiss sichtbaren Zähne. Hierzu ist es erforderlich, dass der Zahntechniker genaue Informationen über die Farbe des Zahnersatzmaterials erhält. Hierzu wird bereits mittels einer Videokamera ein Bild von den Zähnen aufgezeichnet, abgespeichert und beispielsweise per Datenträger dem Zahntechniker zur Verfügung gestellt. Dieser kann dann aufgrund der Vorlage im Bildschirm das entsprechende Zahnersatzmaterial auswählen. Ein bekanntes Problem bei diesem Verfahren stellt jedoch die Belichtung dar. Da üblicherweise jeder Zahnarzt unter anderen Lichtverhältnissen die Aufnahme tätigt und die Videokamera ihren eingebauten Weißabgleich durchführt, gelingt keine originalgetreue Farbwiedergabe bei dem Zahntechniker. Dies liegt daran, dass der Weißabgleich in den Videokameras durch Veränderung von nur zwei der Primärfarben rot (R), grün (G) und Blau (B) verändert, während die drille Farbe unverändert bleibt. Damit ist ein einheitlicher Weißabgleich unabhängig vom Aufnahmeort und der Belichtung bei dem jeweiligen Zahnarzt nicht möglich, so dass die Abbildung bei dem Zahntechniker ungenau wird.

Aus der DE 31 34 273 A1 ist ein Verfahren zum Vergleich der Farben von Oberflächenbereichen mit ausgewählten Farben bekannt, um farbige Kennzeichnungen von Gegenständen zu überwachen. Bei diesem Verfahren wird eine Farbfernsehkamera auf eine Oberfläche, die eine ausgewählte Farbe hat eingestellt, bis die Oberfläche mit der ausgewählten Farbe wenigstens ungefähr auf dem gesamten Schirm eines von der Farbfernsehkamera gespeisten Farbfernsehmonitors angezeigt wird. Danach werden die von der Farbfernsehkamera zu der ausgewählten Farbe erzeugten Primär-Farbsignale gespeichert und anschließend nach der Entfernung der Oberfläche mit der ausgewählten Farbe Oberflächen mit den zu vergleichenden Farben vor die Farbfernsehkamera gebracht, deren von der Farbfernsehkamera erzeugten Primär-Farbsignale mit den gespeicherten Primär-Farbsignalen zur Feststellung der Übereinstimmung verglichen werden.

Die DE 196 37 234 A1 offenbart ein selbsttätiges Verfahren zur Online-Überprüfung der Farbreinheit von strukturierten oder nicht strukturierten Oberflächen mit einer aus einer oder mehreren Videokameras und einem Computer bestehenden Einrichtung, insbesondere zum Zwecke der Qualitätskontrolle₁ wobei die Oberflächen mittels der Videokamera erfasst und die erhaltenen elektronischen Signale mittels des Computers ausgewertet werden. Dabei wird gleichzeitig mit Erfassung der Oberfläche oder in einem vorhergehenden oder nachfolgenden Schritt die Farbwerte einer oder mehrerer gemusterter Referenztafeln erfasst, wobei die optische Auflösung der Einrichtung ausreichend niedrig eingestellt wird, so dass die Struktur der Oberfläche und/oder das Muster der Referenztafel nicht erfasst wird. Aus den erhaltenen elektronischen Signalen wird für die Oberfläche und die Referenztafel ein Signal gebildet, das die integralen relativen Farbwerte bezogen auf die Referenztafel darstellt. Jede Tafel mit ungleichmäßiger Farbverteilung, so zum Beispiel auch eine farbige Abbildung von Gegenständen auf einem Foto, können eine gemusterte Referenztabelle darstellen. Dieses Verfahren ist besonders geeignet für die Kontrolle auf Löcher und Dichtstellen in Textilbahnen.

Die DE 195 01 897 A1 beschreibt ein Verfahren zum Festlegen der Farbe eines Ersatzzahnes bei dem das bisher erfolgte manuelle Auswählen eines Ersatzzahnes in einer zu füllenden Zahnlücke automatisiert ist. Gemäß dem Verfahren wird die Farbe mindestens eines der durch den Ersatzzahn zu füllenden Zahnlücke benachbarten natürlichen Zahnes mit einer Anzahl von Muster-Ersatzzahn-Farben verglichen und die Ersatzzahn-Farbe so ausgewählt, dass sie möglichst weitgehend mit der Farbe der Nachbarzähne übereinstimmt. Dazu wird mittels eines elektronischen Farbsensors die Farbe mindestens eines Nachbarzahnes gemessen, der so bemessene Farbwert in einem einen Farbkomparator aufweisenden Rechner mit einer Vielzahl dort zuvor gespeicherter, alphanumerisch gekennzeichneter Muster-Ersatzzahn-Farben verglichen und schließlich derjenige Ersatzzahn ausgesucht, bei dem die Differenz zwischen der Farbe mindestens eines Nachbarzahnes von demjenigen des ausgesuchten Ersatzzahnes möglichst gering ist, und anschließend der so ausgesuchte Muster-Ersatzzahn angezeigt.

Bei diesen bekannten Verfahren und Vorrichtungen geht es im Wesentlichen darum, die Farbe zu erfassen und automatisch zu vergleichen. Sie behandeln nicht die farbgetreue Aufnahme und Wiedergabe von Objekten.

Der vorliegenden Erfindung liegt daher die Aufgabe zugrunde, eine Möglichkeit vorzuschlagen, mit der Objekte unabhängig von dem Ort der Aufnahme und den dort herrschenden Lichtverhältnissen farbgetreu nach der Aufnahme mittels einer Videokamera auf einem Bildschirm, beispielsweise eines Personalcomputers (PC), insbesondere entfernt von dem Aufnahmeort wiedergegeben werden kann.

Diese Aufgabe wird erfindungsgemäß durch das Verfahren mit den Merkmalen des Anspruchs 1 gelöst. Weitere vorteilhafte Ausgestaltungen sind den Unteransprüchen zu entnehmen.

Gemäß dem Verfahren wird in einem ersten Einstellungsschritt die Videokamera (VK), die Digitalisierungseinrichtung (DE) und die Datenverarbeitungseinrichtung (PC) auf eine originalgetreue Farbwiedergabe von Objekten bei einer bestimmten Belichtung eingestellt und diese Einstellungen gespeichert. Dies erfolgt beim Hersteller oder Vertreiber des Systems, in dem das System bei einer optimalen hellen, möglichst weißen Belichtung verschiedene Objekte mittels der Videokamera aufgenommen und auf dem zugehörigen Bildschirm des PC dargestellt werden. Die Einstellungsmöglichkeiten an der Kamera, der Digitalisierungseinrichtung sowie dem PC werden genutzt, um das Gesamtsystem solange einzutrimmen, bis auf dem Bildschirm eine farbgetreue Wiedergabe verschiedener einzeln aufgenommener Originalobjekte sichtbar ist. Anschließend werden diese Einstellungen gespeichert und sind einer Veränderung, beispielsweise durch den späteren Benutzer nicht mehr zugänglich.

In einem zweiten Einstellungsschritt des Verfahrens werden bei der gleichen Belichtung die digitalen RGB-Werte einer Farbskala von einer weißen Kalibrierkarte erfasst und gespeichert. Nachdem die Objekte in dem ersten Einstellungsschritt originalgetreu wiedergegeben wurden, wird an der gleichen Stelle ohne Änderung der Belichtung oder sonstigen Einstellungen eine weiße Kalibrierkarte mit der Videokamera aufgenommen. Diese liefert entsprechende RGB-Werte an die Digitalisierungseinrichtung. Die RGB-Werte werden üblicherweise bei der Farbtechnik ausgehend von einem Mittelwert in insgesamt im Augenblick 256 Werte - 128 positive und 128 negative Werte - aufgeteilt, wobei die Nulllinie bei dem Wert 128 die Normaleinstellung darstellt. Die zu dieser weißen Kalibrierkarte gehörenden RGB-Werte werden somit in der Digitalisierungseinrichtung, die die von der Videokamera kommenden Farbsignale in entsprechende digitale Werte umwandelt, gespeichert. Dies kann sowohl bei Videokameras erfolgen, die pro Farbe einen gesonderten Farbkanal liefern oder auch bei Videokameras mit einem Mischsignal, das dann durch die Digitalisierungseinrichtung in die einzelnen Primärfarben zerlegt wird. Mit diesen Einstellungen kann das Gesamtsystem ausgeliefert und zur Aufnahme von Objekten unter einer anderen Belichtung verwendet werden.

Hierzu werden in einem ersten Aufnahmeschritt für ein neues Objekt unter anderen Belichtungsverhältnissen mittels einer gleichen Kallibrierkarte wie bei der Einstellung des Systems die RGB-Werte erfasst, mit den gespeicherten Werten verglichen und die Abweichung gespeichert. Diese Abweichung, vorzugsweise die Differenz, wird benutzt, um die Digitalisierungseinrichtung, beispielsweise je nach Anwendung durch entsprechende Änderung der Eingangspegel für die einzelnen Farbwerte oder durch entsprechende Korrektur der voreingestellten Digitalwerte, an veränderte Aufnahmeverhältnisse anzupassen, um diese veränderten Aufnahmeverhältnisse auszugleichen, damit ein beispielsweise unter mehr grünlichen Belichtungsverhältnissen aufgenommenes Objekt trotzdem bei dem Endbenutzer in seiner natürlichen und originalgetreuen Farbe erscheint und der Grünstich beseitigt ist.

In dem darauffolgenden zweiten Aufnahmeschritt des erfindungsgemäß ausgestalteten Verfahrens wird - bei gleicher Belichtung wie bei der zuvor erfolgten Aufnahme mit der Kalibrierkarte - das Objekt aufgenommen und aufgrund der gespeicherten Abweichung eine Farbkorrektur durchgeführt und die korrigierten Farbwerte zur Weitergabe gespeichert. Mit den korrigierten digitalisierten RGB-Werten liegt nun eine originalgetreue Aufnahme in Bezug auf die Kalibrierkarte vor, die dem Endbenutzer durch Datenträgeraustausch zur Verfügung gestellt werden kann.

Gemäß einer besonders bevorzugten Ausführung des Verfahrens wird die Helligkeitsveränderung, die aufgrund der Farbkorrektur und damit der Veränderung der Summe der Farbwerte entsteht, durch entsprechendes individuelles Anheben oder Absenken jedes Farbwertes durchgeführt. Hierzu wird jede einzelne Farbe mit dem gleichen Wert angehoben oder abgesenkt. Dieser Wert ergibt sich aus den ermittelten Korrekturwerten. Damit wird somit sichergestellt, dass die Aufnahme nicht an Helligkeit verliert und die Farbwiedergabe dadurch zumindest scheinbar beeinflusst wird.

Vorteilhafterweise werden in dem ersten Aufnahmeschritt in der Digitalisierungseinheit die Differenzen der einzelnen Farbwerte zwischen den gespeicherten und den gemessenen Farbwerten ermittelt und entsprechend ihrem Vorzeichen in dem zweiten Aufnahmeschritt die gemessenen Farbwerte um die jeweiligen Differenzwerte korrigiert. Zum Helligkeitsausgleich wird vorteilhafterweise das arithmetische Mittel der Differenzwerte aus allen drei Farben ermittelt und der Mittelwert mit entgegengesetztem Vorzeichen (multipliziert mit dem Faktor (-1)) zur Helligkeitskorrektur den Farbwerten hinzuaddiert. Die Helligkeitskorrektur kann entweder durch entsprechendes Anheben oder Absenken der Differenzwerte oder später durch entsprechendes Anheben oder Absenken der fehlerkorrigierten Farbwerte der Objektaufnahme erfolgen.

Bei dem erfindungsgemäß ausgestalteten Verfahren vergleicht eine Digitalisierungseinrichtung zuerst die Farbwerte der einzelnen Farbkanäle einer Voraufnahme mit gespeicherten Farbvorgabewerten für die Farbkanäle, ermittelt aus der Differenz der Farbwerte für jeden Farbkanal einen Farbkorrekturwert und addiert den Farbkorrekturwert zu jedem Farbwert jedes Farbkanals bei der Objektaufnahme hinzu. Vorzugsweise wird zur Helligkeitskorrektur auf die Helligkeit des Aufnahmeobjekts zu jedem Farbkanal zusätzlich der mit dem Faktor (-1) gewichtete arithmetische Mittelwert der Fehlerwerte hinzuaddiert.

Das Verfahren setzt beispielsweise den Zahnarzt in die Lage, eine farbgetreue Aufnahme zu erstellen und seinem Zahntechniker zu übermitteln. Dieser kann wiederum unabhängig von welchem Zahnarzt er die Aufnahme erhält und welche Belichtungsverhältnisse zum Zeitpunkt der Aufnahme vorlagen, die farblich absolut entsprechenden Ersatzzähne herstellen. Dazu ist bei der Aufnahme nur zuvor mittels einer der bei der Einstellung des Systems verwendeten Kalibrierkarte entsprechenden Kalibrierkarte, die dem Benutzer zur Verfügung gestellt wird, eine Anpassungsaufnahme zum Ausgleich der Belichtungsbesonderheiten durchzuführen.

Nachfolgend wird die Erfindung in Verbindung mit den Figuren anhand eines Ausführungsbeispiels näher erläutert. Es stellen dar:
- Figur 1: eine prinzipielle Darstellung der Vorrichtung und
- Figur 2: eine schematische Darstellung der Korrektur der Farbwerte.

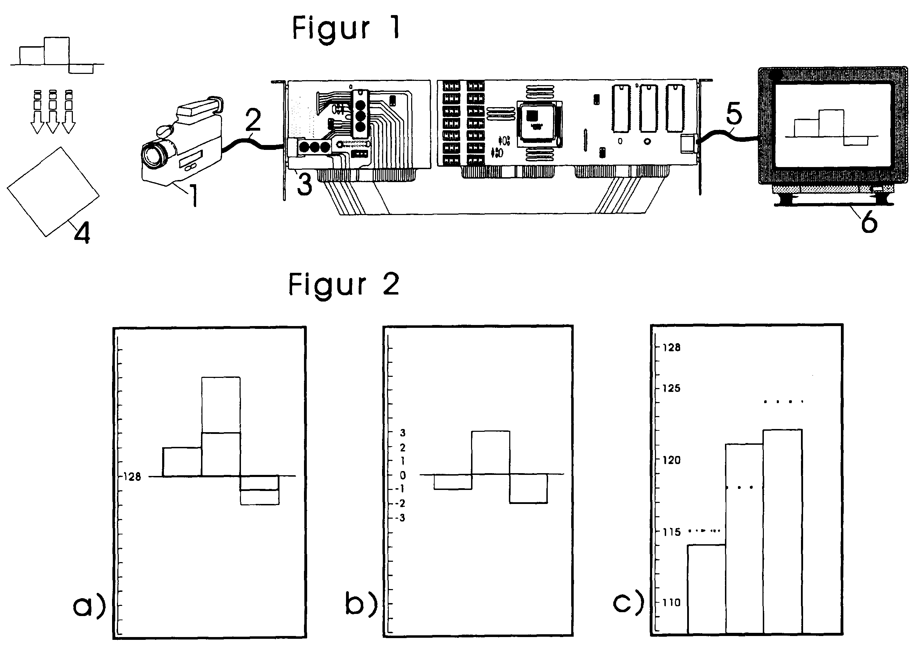

Wie aus Figur 1 ersichtlich, besteht die Vorrichtung aus einer Videokamera 1, die über ein Videokabel 2 mit einer Digitalisierungseinrichtung 3 verbunden ist. In der Digitalisierungseinrichtung 3, die eine nicht dargestellte Vergleichereinrichtung und entsprechende Speicher und Recheneinrichtungen umfasst, die von der Videokamera 1 gelieferten RGB-Werte, die zu einer weißen Kalibrierkarte gehören, verglichen. Die Kalibrierkarte 4 ist in dem Ausführungsbeispiel als quadratische Karte mit mindestens einer mattweißen Oberfläche ausgebildet. Die Digitalisierungseinrichtung 3 wird in dem Ausführungsbeispiel durch eine handelsübliche sogenannte Grabber-Karte realisiert.

Figur 2 zeigt in der Figur 2a beispielhaft abgespeicherte RGB-Werte aufgrund der Eichung und Einstellung des Systems. Davon weichen beispielsweise die an dem neuen Aufnahmeort mittels der die gleiche weiße Farbe aufweisenden Kalibrierkarte aufgenommen RGB-Werte um die Werte 0, 4, -1, wie ebenfalls in Figur 2a dargestellt, ab. Diese Abweichung wird in der Digitalisierungseinrichtung 3 gespeichert und die aufgrund der Objektaufnahme gelieferten RGB-Werte werden um diese Korrekturwerte berichtigt. Um auch die Helligkeit nicht zu verändern, wird eine Helligkeitskorrektur derart durchgeführt, dass aus der Fehlersumme, in dem Beispiel +3 der Mittelwert gebildet und dieser mit dem Faktor (-1) multipliziert wird. Dies ergibt bei diesem Beispiel als arithmetischen Mittelwert die Zahl 1 und als Helligkeitskorrekturwert den Wert -1. Daraus ergeben sich als Fehlerkorrekturwerte die Werte -1, 3, -2. Dies ist in Figur 2b dargestellt.

Wird nun von der Videokamera 1 ein Farbsignal beispielsweise mit den RGB-Werten 115, 118, 124 geliefert, so werden diese Werte aufgrund der vorstehend ermittelten Fehlerkorrekturwerte -1, 3, -2 auf 114, 121, 122 korrigiert. Die Summe der RGB-Werte hat sich damit nicht verändert, d.h. die Helligkeit ist unverändert, jedoch wurden farbliche Schwankungen bei der Aufnahme beseitigt. Figur 2c zeigt die RGB-Werte des Objekts vor und nach der Korrektur.

Die korrigierten RGB-Werte können nun über die Leitung 5 in den PC 6 abgespeichert und in anderen PC's farbgetreu abgebildet werden.

Das Verfahren und die Vorrichtung erlauben damit die originalgetreue Farbwiedergabe des Objekts unabhängig von den Einflüssen der Belichtung (Weißabgleich). Durch den Einsatz eines Coloranalysers ist es möglich, dies genau zu messen. Es konnte numerisch belegt werden, dass mit dem Verfahren und der Vorrichtung Farbeinflüsse in der Beleuchtung einwandfrei neutralisiert und damit farbgenaue Aufnahmen abgespeichert werden können.

## Patentansprüche

1. Verfahren zur Farbbestimmung von Objekten, insbesondere von Zähnen, unter Verwendung einer Videokamera (1), die Farbsignale zu einer Digitalisierungseinrichtung (3) liefert sowie eines mit der Digitalisierungseinrichtung verbundenen Personalcomputers (6), bei dem die Farbe des Objekts aufgenommen und durch Datenaustausch in einem anderen Personalcomputer ein farbgetreues Abbild des Objekts erzeugt wird, wobei
in einem ersten Einstellungsschritt die Videokamera (1), die Digitalisierungseinrichtung (3) und der Personalcomputer (6) auf eine originalgetreue Farbwiedergabe von Objekten bei einer bestimmten Belichtung eingestellt und diese Einstellungen gespeichert werden,
in einem zweiten Einstellungsschritt bei gleicher Belichtung die digitalen Farbwerte (RGB-Werte) einer Farbskala von einer weißen Kalibrierkarte (4) erfasst und gespeichert werden,
in einem ersten Aufnahmeschritt für ein neues Objekt unter anderen Belichtungsverhältnissen mittels der gleichen Kalibrierkarte (4) die RGB-Werte erfasst, mit den gespeicherten Werten verglichen und die Abweichung gespeichert wird und
in einem zweiten Aufnahmeschritt bei gleicher Belichtung das Objekt aufgenommen und aufgrund der gespeicherten Abweichung eine Farbkorrektur durchgeführt und die korrigierten Farbwerte zur Weitergabe gespeichert werden.

2. Verfahren nach Anspruch 1, **dadurch gekennzeichnet,** dass die Helligkeitsveränderung infolge der Farbkorrektur der Objektfarbe durch entsprechendes individuelles Anheben oder Absenken aller Farbwerte durchgeführt wird.

3. Verfahren nach Anspruch 2, **dadurch gekennzeichnet,** dass in dem ersten Aufnahmeschritt in der Digitalisierungseinrichtung (3) die Differenz zwischen den gespeicherten und den gemessenen jeweiligen Farbwerten ermittelt und in dem zweiten Aufnahmeschritt die gemessenen Farbwerte um die jeweiligen Differenzwerte korrigiert werden.

4. Verfahren nach Anspruch 3, **dadurch gekennzeichnet,** dass das arithmetische Mittel der Differenzwerte aus allen drei Farbwerten ermittelt und der Mittelwert mit entgegengesetztem Vorzeichen zur Helligkeitskorrektur den Farbwerten hinzuaddiert wird.

5. Verfahren nach Anspruch 1, **dadurch gekennzeichnet,** dass die Digitalisierungseinrichtung (3) zuerst die Farbwerte der einzelnen Farbkanäle einer Voraufnahme mit gespeicherten Farbvorgabewerten für die Farbkanäle vergleicht, aus der Differenz der Farbwerte für jeden Farbkanal einen Farbkorrekturwert ermittelt und den ermittelten Farbkorrekturwert zu jedem Farbwert jedes Farbkanals bei der Objektaufnahme hinzuaddiert.

6. Verfahren nach Anspruch 5, **dadurch gekennzeichnet,** dass die Digitalisierungseinrichtung (3) zur Helligkeitskorrektur auf die Helligkeit des Aufnahmeobjekts zu jedem Farbkanal zusätzlich den mit dem Faktor (-1) gewichteten arithmetischen Mittelwert hinzuaddiert.
